Europäisches Patentamt

European Patent Office

Office européen des brevets

(19)

(11) **EP 1 698 598 A1**

(12) **EUROPEAN PATENT APPLICATION**

(43) Date of publication:
06.09.2006 Bulletin 2006/36

(51) Int Cl.:
*C03C 25/12* *(2006.01)*

(21) Application number: 06250914.6

(22) Date of filing: 21.02.2006

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **03.03.2005 US 658122 P**

(71) Applicant: **Rohm and Haas Company
Philadelphia, PA 19106-2399 (US)**

(72) Inventors:
• **Frechem, Bart Shannon
Pennsylvania 19147 (US)**

• **Gappert, Griffin Melaney
Philadelphia
Pennsylvania 19147 (US)**
• **Post, Robert Lee
Ivyland
Pennsylvania 18974-1625 (US)**

(74) Representative: **Kent, Venetia Katherine et al
Rohm and Haas (UK) Ltd.
European Patent Department
4th Floor, 22 Tudor Street
London EC4Y 0AY (GB)**

(54) **Method for reducing corrosion**

(57) A method for reducing corrosion of a wash water system for fiber glass forming lines, by using a corrosion meter, is provided. Also provided is a fiberglass manufacturing process that utilizes the method.

EP 1 698 598 A1

**Description**

BACKGROUND OF THE INVENTION

This invention relates to a method for reducing corrosion of a wash water system for glass forming lines, by using a corrosion meter, as well as fiber manufacturing processes utilizing the method.

BRIEF SUMMARY OF THE INVENTION

In the fiberglass industry, a dilute binder solution is sprayed onto molten glass fibers in a fiberglass mat forming area. The excess sprayed binder solution that did not attach to the glass fibers, as well as glass fibers coated with the binder, collect on the internal surfaces of the fiberglass mat forming area. This excess binder and glass fibers are rinsed away with wash water, and directed to a recirculation system for recycling. The sprayed glass fibers are transported from the fiberglass mat forming area by a chainbelt. Excess binder and coated glass fibers also collect on the chainbelt, and must be washed off from the chainbelt after the fiberglass mat leaves the forming section. The wash water used to wash off the chainbelt is also collected and recirculated. A small portion of the recirculated wash water is recycled back into the binder feed, for the purpose of diluting the binder. The use of the wash water system helps to prevent equipment damage and blockage due to the buildup of the glass fibers, and binder which contains corrosive materials, thereby limiting the amount of downtime associated with equipment cleaning, repair and replacement.

Polycarboxylic acid-based fiberglass binder resins are often used in the glass industry for various applications, including for example, insulation, ceiling tiles, and other architectural products. These type of binders provide products having strong mechanical properties, decreased reliance on environmental control equipment, as well as other benefits. One problem commonly associated with currently available wash water systems is that the polycarboxylic acid binder, and hence the wash water used to wash off the binder, becomes acidic as the number of cycles of removing binder increases. This acidic wash water can corrode the process equipment, including the wash water equipment, which is typically made of carbon steel, thereby limiting the equipment's useful life. This results in added manufacturing costs due to equipment replacement and downtime.

There have been a variety of attempts to address this corrosion problem. For example, others have replaced carbon steel in the forming and wash water equipment with stainless steel. However stainless steel equipment is expensive relative to equipment made of carbon steel. Another proposed solution has been to decrease the amount of cycles that the wash water is introduced through the forming equipment. However, this also leads to increased costs in terms of water usage and wastewater removal. U.S. Patent Application Publication No. 2003/0221457 discloses a method of reducing acid corrosion of the surfaces of equipment used to form fiberglass insulation, by using a closed loop wash water system, and controlling the wash water pH by automatically adding base to the wash water when a pH probe in the wash water tank registers a wash water pH of below 8.0. This is not a particularly effective means for corrosion reduction, in part because it does not take into consideration the fact that corrosiveness of the wash water is not due solely to the presence of acid, and thus the pH of the wash water. Therefore, there remains a need for an effective method for reducing corrosion in the forming and wash water equipment of a glass fiber manufacturing process. Applicants have found that by using a control system that utilizes a corrosion meter-based controller, it is possible to reduce the corrosion of such forming and wash water equipment.

DETAILED DESCRIPTION OF THE INVENTION

A first aspect of this invention is a method for reducing corrosion in a fiberglass manufacturing process, said method comprising: (a) providing a glass fiber binding system comprising a feed stream comprising a polymeric binder, water, and a strong acid, wherein said binder comprises at least one of a polyacrylic acid polymer or copolymer, and wherein the pH of said feed stream is less than 4; (b) spraying said feed stream onto glass fibers in a forming chamber; (c) providing a wash water system comprising at least one wash water process line, wherein said wash water system receives recycled water from said forming chamber through said wash water process line; (d) collecting said wash water in at least one wash water collection container; (e) positioning a corrosion meter probe to measure the rate of corrosion in at least one of a wash water line leading to said wash water collection container, a wash water line leading from said wash water collection container, or the inside of said wash water collection container; and (f) providing a first controller that adds a base to said wash water when said corrosion meter probe detects a corrosion rate above a corrosion meter setpoint, wherein said base is added at one or more points along at least one of said wash water lines, or in said wash water collection container, or both.

A second aspect of this invention is a fiberglass manufacturing process comprising: (a) a glass fiber binding system comprising a feed stream comprising a polymeric binder, water, and a strong acid, wherein said binder comprises at least one of a polyacrylic acid polymer or copolymer, and wherein the pH of said feed stream is less than 4; (b) a forming chamber for spraying said feed stream onto glass fibers; (c) a wash water system comprising at least one wash water process line, wherein said wash water system receives recycled water from said forming chamber through said wash water process line; (d) at least one wash water collection container for collecting said wash water; (e) at least one corrosion meter probe for measuring the rate of corrosion in at least one of a wash water line leading to said wash water collection container, a wash water line leading from said wash water collection container, or the inside of said wash water collection container; and (f) a first controller that adds a base to said recirculating water when said corrosion meter probe detects a corrosion rate above a corrosion meter setpoint, wherein said base is added at one or more points along at least one of said wash water lines, or in said wash water collection container, or both.

This invention is directed, among other things, toward the prevention, or reduction, of corrosion in the process equipment of a fiberglass manufacturing process, particularly the process equipment in which wash water is utilized. This is accomplished by using a controller to add base to the wash water when a corrosion meter probe, in contact with the wash water, detects a corrosion rate above a corrosion meter setpoint. This method is particularly effective in that it is not limited to any single source of corrosion, thus it provides corrosion reduction regardless of the source of the corrosion, or the presence of factors influencing the rate of corrosion, such as, for example, the overall chemistry of the wash water, the flowrate or degree of turbulence in the process equipment, oxygen content of the wash water, presence of foreign matter, biological matter, oxidizing biocides, or dissolved salts in the wash water, metal content in the wash water, and amount of binder in the wash water, among others.

The invention includes a glass fiber binding system that contains a feed stream. The feed stream contains a polymeric binder, water and a strong acid, and may contain other materials commonly used with fiberglass binders. The polymeric binder may be any binder suitable for binding glass fibers, including, binders based on polyacrylic acid polymers and copolymers. By "polyacrylic acid copolymers" is meant herein, copolymers containing as copolymerized units acrylic acid, and at least one other co-monomer. The binder may include, in its formulation, a strong acid, as described below. Examples of suitable binders are described, for example, in U.S. Patent No. 5,661,213, U.S. Patent Application No. 11/053,799, and U.S. Patent Application Publication No. 2005-0038193, all of which are herein incorporated by reference.

The strong acid may be a mineral acid, such as, for example, sulfuric acid, or an organic acid, such as, for example sulfonic acid. Mineral acids are preferred. The pH of the feed stream is maintained at less than 4, preferably less than 3.5, more preferably less than 3. The strong acid may be present in the binder formulation prior to feeding the binder to the feed stream. Alternatively, the strong acid may be fed to the feed stream, in which case the flowrate of the strong acid directed to the feed stream is controlled so that the pH of the feed stream is maintained at the levels described above. The strong acid may be added continuously to the diluted binder immediately prior to, or simultaneous with spraying of the feed stream onto the glass fibers. Preferably, a pH meter is used in conjunction with a controller to maintain the low pH of the feed stream. Such low pH's are preferred, as they provide for improved curing of the binder during subsequent processing steps. The addition of the strong acid enables not only reduction of the high pH of the binder, but also eliminates any undesirable alkalinity coming from the wash water.

It is known that the presence of some ions, especially sodium ions and calcium ions, inhibits the desired binder crosslinking which normally occurs in the downstream cure processing. The use of neutralized wash water for binder dilution may result in the presence of a high level of undesirable ions. One way to avoid this problem is to use fresh water, softened water, or deionized water for binder dilution. However, this generally results in an environmentally-undesirable aqueous waste stream. An alternative solution is to split the wash water system into two completely separate systems. The first system, which utilizes neutralized wash water, can be constructed of materials that are susceptible to corrosion, such as carbon steel. This first system cannot be used for binder dilution purposes. The second system, which utilized non-neutralized process water, can be constructed from expensive, corrosion resistant materials, such as stainless steel. This second system can be used for binder dilution without introducing undesirable ions. Disadvantages of this approach include the high cost of the corrosion resistant materials for the second system, as well as the complexity of operating multiple wash water systems. The present invention eliminates these disadvantages. The addition of the strong acid to the process stream causes displacement of metal ions which have become attached to the binder molecules in the recirculated wash water, making that binder sufficiently reactive for effective curing, without the need to either resort to corrosion-resistant construction, or exclusive use of fresh water or non-neutralized recycled wash water for binder dilution.

The feed stream is sprayed onto the glass fibers in at least one forming chamber. By "forming chamber" is meant herein, an at least partially enclosed area in which glass fibers are sprayed with the feed stream. Not all of the feed stream will be deposited on the glass fibers. The sprayed feed stream not deposited on the glass fibers, the excess feed stream, may land on the internal surfaces of the forming chamber. This excess feed stream, along with glass fibers sticking to the forming chamber walls, may be removed from the forming chamber walls by means of spraying with wash water. The invention includes a wash water system which may be used for this purpose. The wash water system may also be used to remove excess feed stream from other pieces of process equipment, such as, for example, suction boxes, chainbelts, and the like.

The wash water system contains at least one wash water process line, which receives wash water, including recycled wash water, from the forming chamber, and optionally from other process equipment, as described above. By "wash water process line" is meant herein piping which is suitable for transporting the wash water. The wash water from the wash water process line is collected in at least one wash water collection container. The wash water collection container may be any vessel, tank, or other container, whether fully enclosed or not, which is capable of holding at least a portion of the wash water.

The wash water may be recycled into a wash water process line that is used for washing the internal surface of the forming chamber. The same, or at least one different wash water process line, may be used to recycle wash water used for washing the feed stream from other process equipment. The wash water may also be recycled into the feed stream, for purposes of diluting the binder, before, after, or simultaneous with addition of the strong acid to the feed stream.

The corrosion rate of equipment in the wash water system is monitored by at least one corrosion meter, having at least one probe. Preferably, the probe of the corrosion meter is positioned in a wash water process line leading from the wash water collection container, more preferably, it is located in a wash water process line leading to the wash water collection container. Alternatively, the corrosion meter probe may be positioned inside the wash water collection container, in contact with the wash water. Preferably, the probe is positioned where the highest degree of corrosion is expected, such as for example, in areas of high flow, or high turbulence. The corrosion meter probe may be any probe capable of measuring the rate of corrosion in the process equipment. Suitable probes are well known, and include, for example, electrical resistance monitoring probes, linear polarization resistance monitoring probes, and the like. Electrical resistance monitoring probes measure the change in electrical resistance of a metallic element immersed in the liquid process stream, relative to a reference element in the probe. Linear polarization resistance monitoring probes measure the amount of internally applied current needed to change the corrosion potential of a freely corroding specimen by a few millivolts (usually 5 to 20mV). Where a linear polarization resistance monitoring probe is utilized, those having the 2- or 3- electrode configuration are preferred. Corrosion meters suitable for the present invention can be obtained from a variety of vendors, such as, for example Rohrback Cosasco Systems (Santa Fe Springs, California), and Intercorr International (Houston, Texas). The corrosion meter probe is preferably permanently installed in the wash water system, allowing for continuous corrosion rate monitoring. Alternatively, a portable corrosion meter probe may be used for gathering periodic corrosion rate data from one or more locations in the wash water system, however this approach is not preferred, as it does not allow for rapid identification, and correction of corrosion problems. The use of corrosion meter probes enables the rapid identification of corrosion upsets, thereby enabling swift initiation of remedial action. The use of such probes is therefore useful for at least one of prolonging the life of the manufacturing process, minimizing unscheduled downtime, minimizing the amount of base added to the feed stream, and diminishing the need for expensive stainless steel equipment.

At least one base is added to the wash water when a corrosion rate exceeding a predetermined value is detected by the corrosion meter probe. Preferably, the corrosion meter probe periodically, or continuously, sends a signal to a first controller, which initiates introduction of base to the wash water when the probe detects a corrosion rate exceeding a corrosion meter setpoint. The amount of corrosion reduction achievable for a given system will be dependent upon the chemistry of the feed stream and the wash water. Therefore, the setpoint may be selected based on testing to determine what corrosion reduction is achievable for the specific chemistry of the feed stream and the wash water for the particular system. Preferably, base is introduced when the corrosion meter probe detects a corrosion rate of greater than 15 mils/year, more preferably greater than 10 mils/year, even more preferably greater than 4 mils/year, yet more preferably greater than 4 mils/year, and still more preferably greater than 1 mil/year. However, higher rates of corrosion may be acceptable in some cases, therefore, the invention applies to any setpoint that may be selected by the user.

As noted above, a base is added to the wash water when the corrosion rate exceeds a predetermined value. By "base" is meant, any material suitable for neutralizing the feed stream, to the extent necessary for the corrosion rate to be maintained within the predetermined acceptable levels. Suitable bases include, but are not limited to strong and/or weak bases, such as, for example, sodium hydroxide, potassium hydroxide, sodium carbonate, t-butylammonium hydroxide, ammonia, lower alkyl amines, and the like. The base may be added at one or more points along at least one of the wash water lines. Preferably, the base is added to at least one washwater line leading from the wash water collection container. Alternatively, it may be added to at least one washwater line leading to the wash water collection container, or to the washwater inside the wash water collection container.

In one non-limiting and optional embodiment of this invention, the corrosion rate controller is used in conjunction with at least one second controller. The second controller preferably controls the flowrate of the base so that the amount of base added is sufficient to neutralize the acid in the feed stream. The flowrate setpoint of the controller is preferably based on the following algorithm:

$$\text{BASE FLOWRATE} = \text{ACID FLOWRATE (A)} * R \qquad (1)$$

where,

$$\text{ACID FLOWRATE} = \text{strong acid flowrate} + (\text{feed stream flowrate} * \% \text{ binder in feed stream} * \% \text{ sprayed binder not deposited on product glass fibers}) \qquad (2)$$

and where R = a number equal to or greater than:

$$\frac{\text{flowrate base required for neutralization of acid A (B)}}{\text{acid flowrate (A)}}$$

For any given process, 'B', and thus ratio 'R', can be determined by titrating a sample of wash water with a base until an equivalence point is reached. By "equivalence point" is meant herein the point at which all of the acid is neutralized. In this embodiment of the invention, the second controller receives a signal from the first controller when the corrosion meter probe detects a corrosion rate exceeding the corrosion meter setpoint. The signal from the first controller instructs the second controller to adjust the flowrate setpoint, thereby requiring the addition of sufficient additional base to reduce the corrosion rate below the corrosion meter setpoint.

In a different, non-limiting and optional embodiment of the invention, corrosion is further reduced by use of metal sacrificial anodes. The anodes may be made of any metal suitable for reducing corrosion of the wash water system equipment, such as for example metals that will go into a multivalent state in aqueous solution, and have a higher electrochemical activity than iron or steel, including for example, magnesium, zinc, aluminum, and the like. Zinc sacrificial anodes are preferred. The anodes may be placed anywhere (in one or more locations) in the wash water system where they will be constantly wetted. For example, they may be placed in the suction box beneath the chainbelt, or in any other suitable location. Preferably, the sacrificial anodes are bolted to the process equipment. The sacrificial anodes are particularly useful for equipment which tends to be exposed to low pH, and which is not typically washed with wash water. The sacrificial anodes, which are electrically coupled to the equipment steel, will generate a galvanic potential which causes the steel equipment to resist corrosion, and thus aids in the reduction of the corrosion rate. The sacrificial anode provides corrosion reduction within the area surrounding the sacrificial anode. An additional benefit of use of the sacrificial anode is that metal dissolved from the anode reduces the corrosivity of the wash water in areas not in the immediate vicinity of the anode. The reduction of corrosion of the wash water may also be obtained by addition of a zinc compound to the wash water, whether or not the system uses sacrificial anodes. Suitable zinc compounds include for example, zinc metal, zinc oxide, zinc hydroxide, zinc salts, and the like. In yet another embodiment of this invention, the steel equipment may be coated with zinc by hot dip galvanizing the steel.

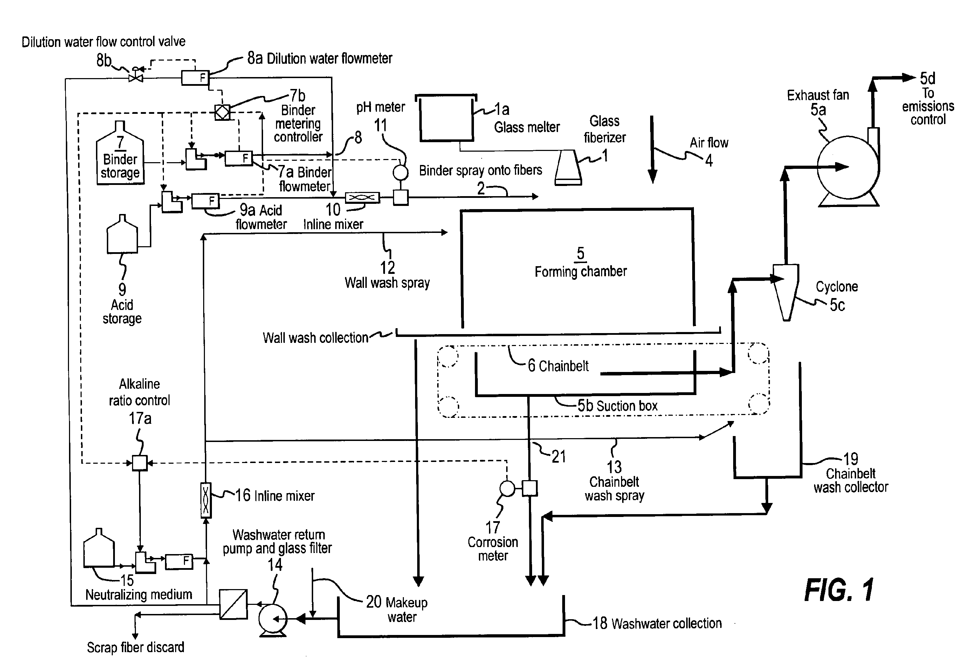

FIG.1 illustrates a fiberglass manufacturing process according to one preferred, but optional embodiment of this invention. In this embodiment, molten glass is prepared in a glass melter (1a), and then formed into fibers by a fiberizer (1). A feed stream (2) is sprayed onto the glass fibers (not shown) by a plurality of spaced nozzles (not shown). The glass fibers are then drawn down via entraining air (4) into a forming chamber (5) where the majority of the glass fibers collect on a moving chainbelt (6), which conveys the glass fiber web (not shown) out of the forming chamber (5), and delivers it to downstream equipment for subsequent processing. The entraining air (4) is drawn by a fan (5a) through the forming chamber (5), through a chainbelt (6), into a suction box (5b), and then through various air emissions control devices, including a cyclone (5c), and then sent for emissions control (5d).

In this embodiment, the feed stream (2), which is sprayed on the glass fibers, is prepared by metering a polyacrylic acid-based binder from a binder storage tank (7), at 50% solids, to the feed stream (2), where it is diluted with a stream of recycled wash water (8). A wash water flowmeter (8a) and wash water control valve (8b) are used to measure and control the flow of dilution wash water (8). A binder flowmeter (7a) is used to measure binder flow. A control system (7b) adjusts the binder feed rate in proportion to the flowrate of the dilution wash water to achieve the desired binder content in the feed stream (2). The pH of the feed stream is maintained at below 3.5 by addition of a mineral acid. The mineral acid is metered from a storage tank (9), to the feed stream (2), where it is mixed into the dilute binder solution using a mixer (10). Since the alkalinity of the wash water can vary significantly due to a number of factors, the addition rate of acid to the dilute binder stream is controlled by a pH meter (11). The flow rate of acid is measured by a flow meter (9a).

Some of the feed stream-coated glass fibers, and some of the feed stream itself, stick to the walls of the forming chamber (5), and do not become part of the glass fiber web. Likewise, some of the feed stream-coated glass fibers, as well as some of the feed stream itself, stick to the chainbelt (6). These fibers and feed stream materials must be washed away to prevent buildup, which would eventually clog the equipment and stop the process from working. This is accomplished by spraying wash water from wash water process lines (12) and (13), onto the walls of the forming chamber (5), onto the chainbelt (6), and anywhere else feed stream-coated glass fiber can accumulate. The wash water, now laden with feed stream-coated glass fiber, is collected in a wash water collection container. Prior to being directed to the wash water collection container (18), the wash water from the chainbelt washing is collected in a chainbelt wash collector (19). The glass fibers are separated from the wash water by filtering, and discarded. The filtered wash water is pumped, by a wash water return pump (14), back to the wash water system, where a portion of it is directed toward wash water process lines (12) and (13) for equipment washing, and a different portion of it is directed toward wash water process lines for binder dilution (8). A makeup wash water process line (20) is used to replenish process water lost, for example, due to evaporation.

To reduce the corrosivity of the wash water, a base is added to the wash water. This is done by metering the base, for example, a sodium hydroxide solution, from a base storage tank (15), to a wash water process line (12), where it is mixed into the wash water solution using, for example, an inline mixer (16). The rate at which the base is metered to the system is based on the measured amounts of acid (whether from the binder or the mineral acid) added to the feed stream. The setpoint of the controller (17a) is set so that the flowrate of the base is controlled such that it neutralizes the acid in the feed stream (2). The controller (17a) receives signals from a corrosion meter (17) in the wash water process line (21) leading from the suction box to the wash water collection container (18). The corrosion meter (17) measures the current corrosiveness of the wash water, and when the corrosion meter probe detects a corrosion rate of greater than 4 mils/year, the corrosion meter (17) sends a signal to the controller (17a), instructing it to adjust its setpoint to require the addition of more base. Conversely, the corrosion meter (17) instructs the controller (17a) to adjust its setpoint to reduce the flowrate of the base to the wash water if the corrosion rate is below the setpoint.

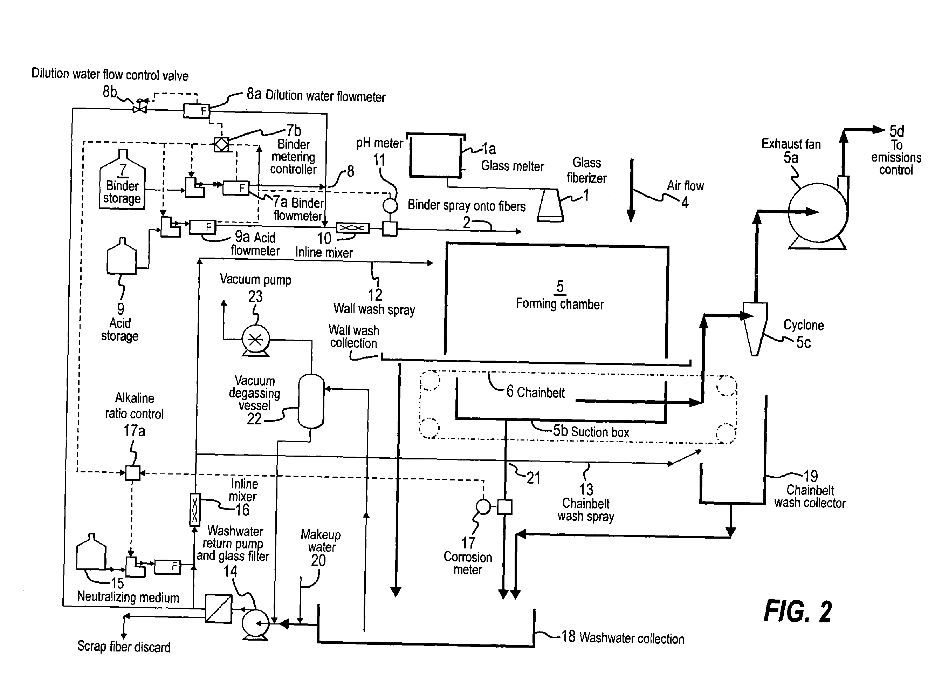

In one optional embodiment of the invention, the corrosion rate is further decreased by reducing the amount of oxygen dissolved in the wash water. The oxygen may be removed from the wash water by mechanical or chemical means. Mechanical means for oxygen removal include for example, vacuum degassing, steam dearation, inert gas stripping, and the like. As illustrated in FIGURE 2, vacuum degassing may be performed, for example, by introducing wash water to a vessel (22) that is under a vacuum created by a positive displacement vacuum pump (23), steam jet, water ring vacuum pump, centrifugal vacuum blower or similar mechanical device suitable for conveying gases from an evacuated space. The wash water may be sprayed into the vessel (22) as droplets to facilitate gas removal. The vessel (22) may contain trays to enable the formation of thin films of the wash water, in addition to the droplets, to further aid gas removal.

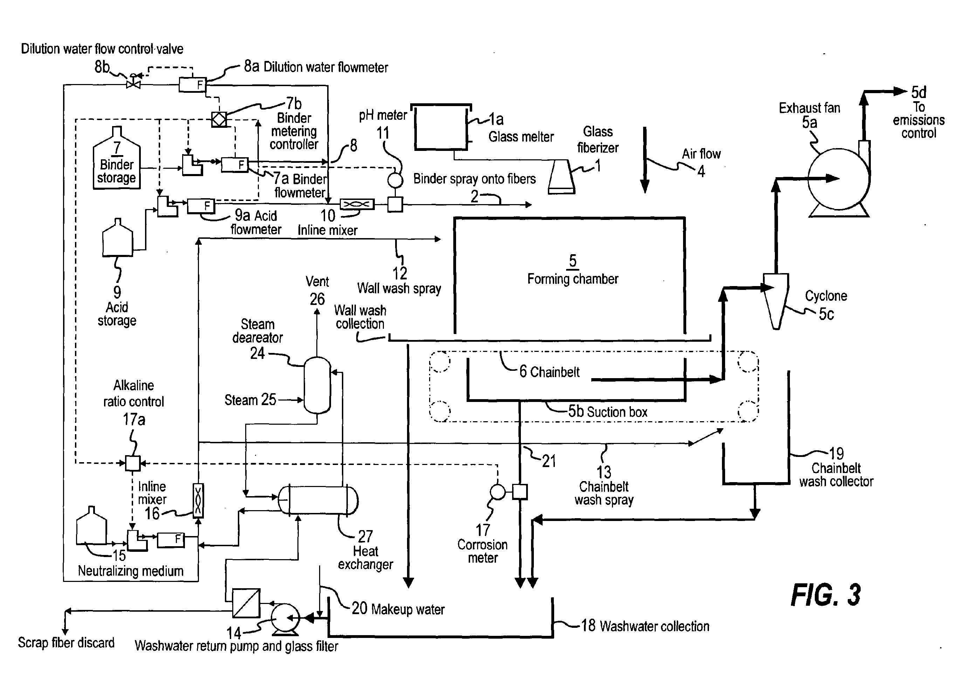

As shown in FIGURE 3, steam deaeration may be performed, for example, by spraying wash water into the top of a vessel (24) which is pressurized with low pressure steam (25) that is introduced at the bottom of the vessel (24). Trays, or fill such as, for example, rings, saddles, mesh, and the like, may be placed inside the vessel (24), to improve contact between the wash water, as it falls from the top of the vessel (24) to the bottom, and the steam (25), which flows up to the top of the vessel (24) from the steam inlet (25) at the bottom. This contact assists in the disengagement of the air from the wash water. Air, along with some steam (25), is purged out of the vessel (24) through a vent (26). A liquid to liquid "interchanger" heat exchanger (27) can be used to preheat the wash water entering the deaerator vessel (24), where the heating medium is the heated water leaving that vessel (24).

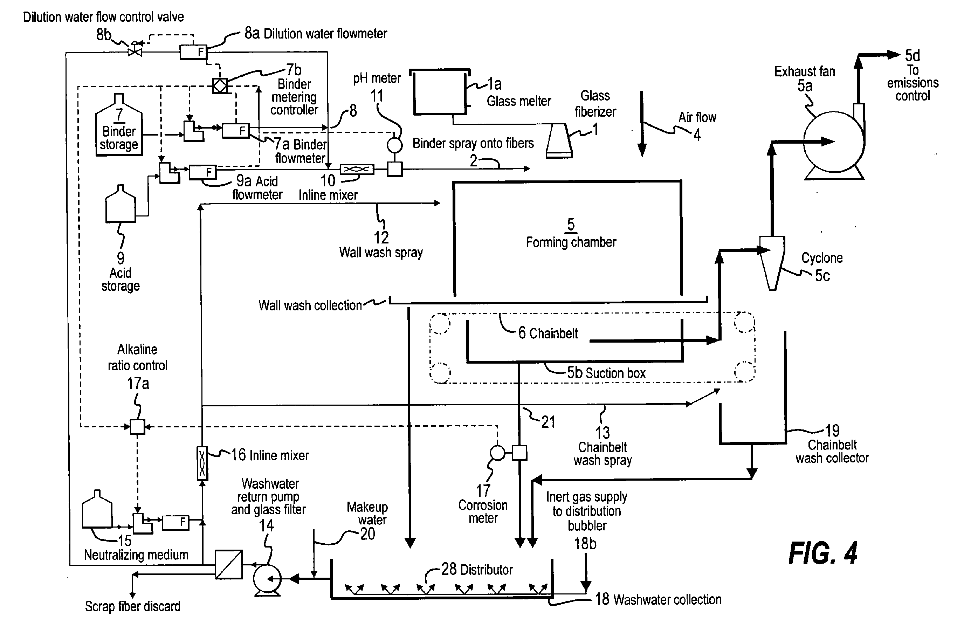

Inert gas stripping may be performed, for example, by spraying wash water in the top of a vessel, while a gas having a very low oxygen content is simultaneously introduced at the other end of the vessel. Trays, or fill, such as for example, rings, saddles, mesh, and the like, may be placed inside the vessel to improve the contact between the wash water and the gas. The gas will acquire at least a portion of the oxygen in the wash water, removing the oxygen from the system via a vent in the vessel. Alternatively, as shown in FIGURE 4, this intimate wash water/gas contact can be achieved by introducing the gas into a tank containing wash water, such as, for example, the wash water collection container (18), via a pipe (18b). This pipe (18b) feeds a distribution system (28) that generates small bubbles of air which rise through the water. The distributor (28) can be a piping network with many small holes drilled in the pipe walls, a porous plate-type distributor, or any other configuration that generates a large number of evenly-distributed small bubbles in the wash water. The inert gas may be nitrogen that has been separated from air cryogenically, by diffusion, or by any other technique, low-oxygen inert combustion flue gases, or any other gas having a low oxygen content.

Chemical means for oxygen removal include, for example, addition to the wash water of inorganic salts of partially oxidized compounds which will further oxidize in the wash water, organic materials which will oxidize and thus consume the oxygen in the wash water, enzymes and alcohol, or other suitable materials. Inorganic oxygen scavengers suitable for the invention include, for example sulfites such as sodium sulfite or sodium metabisulfite, sodium borohydride, various dithionites, thiosulfites or phosphites, and the like. The oxygen-scavenging activity of the inorganic salts may be improved by use of a catalyst, such as for example, cobalt chloride. The wash water temperature may be raised to enable oxidation by the inorganic salts to occur more efficiently and rapidly. Organic materials suitable for use with the invention include, for example, tannin-based oxygen scavengers such as Accepta™ 2012 (Accepta, Manchester, United Kingdom), hydrazine ($N_2H_4$), carbohydrazine, hydroquinone, diethylhydroxyethanol, methylethylketoxime, paramethoxyphenol, phenol, and the like. The addition of enzymes and alcohol to the wash water may cause the alcohol to react with dissolved oxygen. Examples of suitable enzymes and alcohols may be found, for example, in United States Patent No. 4,414,334, herein incorporated by reference. The chemical scavenger may be added directly to the wash water, or it may be added to the feed stream, or to any process line leading to the wash water.

While the invention has been described in terms of preferred, but optional embodiments, it will be understood, of course, that the invention is not limited to any particular embodiment, since modifications may be made by those skilled in the art, particularly in light of the teachings in this application.

**Claims**

1. A method for reducing corrosion in a fiberglass manufacturing process, said method comprising:

    (a) providing a glass fiber binding system comprising a feed stream comprising a polymeric binder, water, and a mineral acid, wherein said binder comprises at least one of a polyacrylic acid polymer or copolymer, and wherein the pH of said feed stream is less than 4;
    (b) spraying said feed stream onto glass fibers in a forming chamber;
    (c) providing a wash water system comprising at least one wash water process line, wherein said wash water system receives recycled water from said forming chamber through said wash water process line;
    (d) collecting said wash water in at least one wash water collection container;
    (e) positioning a corrosion meter probe to measure the rate of corrosion in at least one of a wash water line leading to said wash water collection container, a wash water line leading from said wash water collection container, or the inside of said wash water collection container; and
    (f) providing a first controller that adds a base to said wash water when said corrosion meter probe detects a corrosion rate above a corrosion meter setpoint, wherein said base is added at one or more points along at least one of said wash water lines, or in said wash water collection container, or both.

2. The method, according to claim 1, wherein said corrosion meter setpoint is 10 mils/year.

3. The method, according to claim 1, wherein said corrosion meter setpoint is 4 mils/year.

4. The method, according to claim 1, wherein said corrosion meter setpoint is 2 mil/year.

5. The method, according to claim 1, wherein said method further includes the steps of:

    (a) providing at least one second controller, and using said second controller to control the flowrate of said base to said feed stream to a flowrate setpoint;
    (b) using said first controller to adjust the setpoint of said second controller when said corrosion meter probe detects a corrosion rate exceeding said corrosion meter setpoint.

6. The method, according to claim 1 or claim 5, wherein said method further comprises the step of providing at least one metal sacrificial anode.

7. The method, according to claim 1 or claim 5, wherein said method further comprises the step of adding a zinc compound to the wash water.

8. The method, according to claim 1 or claim 5, wherein said method further comprises the step of deoxygenating the wash water.

9. The method, according to claim 6, wherein said sacrificial anode is made of a metal selected from the group consisting of zinc, magnesium and aluminum.

**10.** A fiberglass manufacturing process comprising:

(a) a glass fiber binding system comprising a feed stream comprising a polymeric binder, water, and a mineral acid, wherein said binder comprises at least one of a polyacrylic acid polymer or copolymer, and wherein the pH of said feed stream is less than 4;
(b) a forming chamber for spraying said feed stream onto glass fibers;
(c) a wash water system comprising at least one wash water process line, wherein said wash water system receives recycled water from said forming chamber through said wash water process line;
(d) at least one wash water collection container for collecting said wash water;
(e) at least one corrosion meter probe for measuring the rate of corrosion in at least one of a wash water line leading to said wash water collection container, a wash water line leading from said wash water collection container, or the inside of said wash water collection container; and
(f) a first controller that adds a base to said recirculating water when said corrosion meter probe detects a corrosion rate above a corrosion meter setpoint, wherein said base is added at one or more points along at least one of said wash water lines, or in said wash water collection container, or both.

**11.** The fiberglass manufacturing process according to claim 10, wherein said process further comprises at least one second controller for controlling the flowrate of said base to said feed stream to a flowrate setpoint, and wherein said first controller is used to adjust the setpoint of said second controller when said corrosion meter probe detects a corrosion rate exceeding said corrosion meter setpoint.

**12.** The fiberglass manufacturing process according to claim 10 or claim 11, wherein said process further comprises at least one metal sacrificial anode.

*FIG. 1*

FIG. 2

Dilution water flow control valve

8b — 8a Dilution water flowmeter

7b Binder metering controller

7 Binder storage

8

7a Binder flowmeter

9a Acid flowmeter

10 Inline mixer

9 Acid storage

pH meter 11

1a Glass melter

Glass fiberizer

Binder spray onto fibers — 1

2

Air flow 4

5d To emissions control

Exhaust fan 5a

Vacuum pump 23

12 Wall wash spray

Wall wash collection

5 Forming chamber

Cyclone 5c

Vacuum degassing vessel 22

Alkaline ratio control 17a

6 Chainbelt

5b Suction box

Inline mixer 16

21

13 Chainbelt wash spray

19 Chainbelt wash collector

Washwater return pump and glass filter 14

Makeup water 20

17 Corrosion meter

15

Neutralizing medium

18 Washwater collection

Scrap fiber discard

EP 1 698 598 A1

10

FIG. 3

Dilution water flow control valve

8b — 8a Dilution water flowmeter

7b
Binder metering controller

7 Binder storage

7a Binder flowmeter

pH meter 11

1a Glass melter

Glass fiberizer

Air flow 4

Exhaust fan 5a

5d To emissions control

8

Binder spray onto fibers 2

1

9a Acid flowmeter

10 Inline mixer

9 Acid storage

12 Wall wash spray

5 Forming chamber

Cyclone 5c

Vent 26

Wall wash collection

Steam deareator 24

Alkaline ratio control 17a

Steam 25

6 Chainbelt

5b Suction box

19 Chainbelt wash collector

Inline mixer 16

27 Heat exchanger

21

17 Corrosion meter

13 Chainbelt wash spray

15 Neutralizing medium

20 Makeup water

18 Washwater collection

Scrap fiber discard

14 Washwater return pump and glass filter

EP 1 698 598 A1

FIG. 4

**European Patent Office**

## EUROPEAN SEARCH REPORT

Application Number

EP 06 25 0914

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/221457 A1 (CLINE HARRY B ET AL) 4 December 2003 (2003-12-04) * the whole document * | 1-12 | INV. C03C25/12 |
| A | US 3 226 314 A (WELLINGTON JOHN R ET AL) 28 December 1965 (1965-12-28) * column 1, line 8 - line 24 * | 1-12 | |
| A | US 5 243 297 A (PERKINS ET AL) 7 September 1993 (1993-09-07) * the whole document * | 6,7,9 | |
| A | DATABASE WPI Section Ch, Week 199903 Derwent Publications Ltd., London, GB; Class D15, AN 1999-027686 XP002384002 & JP 10 277534 A (YAMATAKE HONEYWELL CO LTD) 20 October 1998 (1998-10-20) * abstract * | 8 | |

TECHNICAL FIELDS SEARCHED (IPC)

C03C
G01N
C23F

The present search report has been drawn up for all claims

| Place of search | Date of completion of the search | Examiner |
|---|---|---|
| The Hague | 13 June 2006 | Kervinen, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 06 25 0914

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2006

| Patent document cited in search report | | Publication date | Patent family member(s) | | Publication date |
|---|---|---|---|---|---|
| US 2003221457 | A1 | 04-12-2003 | US | 2003221458 A1 | 04-12-2003 |
| US 3226314 | A | 28-12-1965 | DE<br>GB | 1521694 A1<br>960304 A | 20-08-1970<br>10-06-1964 |
| US 5243297 | A | 07-09-1993 | GB | 2266379 A | 27-10-1993 |
| JP 10277534 | A | 20-10-1998 | NONE | | |

EPO FORM P0459

For more details about this annex : see Official Journal of the European Patent Office, No. 12/82